# EUROPÄISCHE PATENTSCHRIFT

(11) **EP 3 386 153 B1**
(45) Veröffentlichungstag und Bekanntmachung des Hinweises auf die Patenterteilung: **13.11.2019**
(21) Anmeldenummer: 18163296.9
(22) Anmeldetag: 22.03.2018
(51) Int. Cl.: H04L 12/28, H04L 12/24, G06K 7/10, H04W 4/33, H04W 76/11

(54) **VERFAHREN ZUM VERBINDEN EINES HAUSHALTSGERÄTES MIT EINEM DRAHTLOSEN HEIMNETZWERK**
METHOD FOR CONNECTING A DOMESTIC APPLIANCE WITH A WIRELESS DOMESTIC NETWORK
PROCÉDÉ DE CONNEXION D'UN APPAREIL ÉLECTROMÉNAGER À UN RÉSEAU DOMESTIQUE SANS FIL

(30) Priorität: 03.04.2017 DE 102017107087
(43) Veröffentlichungstag der Anmeldung: 10.10.2018
(73) Patentinhaber: Vorwerk & Co. Interholding GmbH, 42275 Wuppertal (DE)
(72) Erfinder: Windorfer, Harald, 40822 Mettmann (DE)
(74) Vertreter: Müller, Enno

(56) Entgegenhaltungen:
- WO-A1-2014/036272
- FR-A1- 2 938 393
- US-A1- 2008 250 122

## Beschreibung

### Gebiet der Technik

Die Anmeldung betrifft ein Verfahren zum Verbinden eines Haushaltsgerätes mit einem drahtlosen Heimnetzwerk, wobei Netzwerkzugangsinformationen mittels eines auf einem Nutzerendgerät dargestellten optischen Codes von dem Nutzerendgerät an das Haushaltsgerät übermittelt werden und wobei sich das Haushaltsgerät unter Nutzung der empfangenen Netzwerkzugangsinformationen an dem drahtlosen Heimnetzwerk anmeldet.

### Stand der Technik

Verfahren der vorgenannten Art sind im Stand der Technik bekannt. Diese dienen insbesondere zum Verbinden eines Gerätes, welches selbst nicht über eine manuelle Eingabeschnittstelle verfügt, mit einem Heimnetzwerk. Um das Gerät verbinden zu können, übermittelt ein anderes Gerät die für die Anmeldung an dem Heimnetzwerk erforderlichen Netzwerkzugangsinformationen an das Gerät.

Die Veröffentlichung FR 2 938 393 A1 offenbart beispielsweise ein Verfahren zum Anschließen eines Unterhaltungsroboters an einen Router. Der Unterhaltungsroboter verfügt über eine Kamera, mittels welcher ein auf einem Display eines Computers angezeigter QR-Code eingelesen wird, der eine Kennung des Routers enthält. Mittels der Kennung des Routers kann sich der Unterhaltungsroboter daraufhin an dem Netzwerk des Routers anmelden.

Nachteilig ist dabei, dass das zu verbindende Gerät nicht unterscheiden kann, ob ein von ihm eingelesener optischer Code für dieses Gerät geeignet ist. Daraus können beispielsweise Fehlfunktionen oder andere Fehlerzustände des Gerätes resultieren, insbesondere solche, die eine ordnungsgemäße Verbindung des Gerätes mit dem Heimnetzwerk verhindern oder zumindest erschweren.

Die Veröffentlichung WO 2014/036272 A1 offenbart ein Verfahren zum Verbinden einer zweiten Steuereinrichtung für ein Heimautomationssystem durch Teilen eines Codes, der mittels einer ersten Steuereinrichtung des Heimautomationssystems generiert wurde, wobei die erste Steuereinrichtung den Code mit der zweiten Steuereinrichtung teilt, ohne dass eine Netzwerkverbindung zwischen diesen erstellt wird.

Die Veröffentlichung US 2008/250,122 A1 offenbart ein Netzwerkkonfigurationsverfahren, bei welchem ein erstes Nutzerendgerät eingerichtet ist, von einem Nutzer Konfigurationsinformationen zu empfangen, die ein erstes Netzwerk betreffen; und wobei ein Programmcode in einem Speicher hinterlegt ist, welcher geeignet ist, einen Barcode mit den Informationen der ersten Netzwerkkonfiguration zu generieren, wobei der Barcode von einem Gerät eingescannt werden kann, das einen Barcodescanner aufweist, der den Code in digitale Daten konvertiert, die zumindest einen Anteil aufweisen, der genutzt werden kann, um eine Nutzerschnittstelle des Gerätes für einen Zugang zu dem ersten Netzwerk zu konfigurieren.

### Zusammenfassung der Erfindung

Ausgehend von dem vorgenannten Stand der Technik ist es daher Aufgabe der Erfindung, ein verbessertes Verfahren zum Verbinden eines Haushaltsgerätes mit einem Heimnetzwerk zu schaffen, insbesondere in Bezug auf eine fehlerfreie Funktion des Haushaltsgerätes.

Zur Lösung der vorgenannten Aufgabe wird vorgeschlagen, dass ein Nutzer eine auf dem Nutzerendgerät installierte Applikation startet und das Haushaltsgerät bezeichnende Zugangsdaten eingibt, wobei mittels der Applikation ein optischer Code generiert wird, in welchen die Zugangsdaten für das Haushaltsgerät, die Netzwerkzugangsinformationen für das Heimnetzwerk und eine Applikations-Identifikation der Applikation eingebunden werden, wobei der optische Code an das Haushaltsgerät übermittelt wird, und wobei das Haushaltsgerät die in dem optischen Code enthaltenen Zugangsdaten sowie die Applikations-Identifikation mit in dem Haushaltsgerät hinterlegten Daten und einer in dem Haushaltsgerät gespeicherten Applikations-Identifikation vergleicht und im Falle der Übereinstimmung die Netzwerkzugangsinformationen aus dem optischen Code extrahiert.

Erfindungsgemäß ist in dem übertragenen optischen Code nun eine Identifikation enthalten, welche die verwendete und auf dem Nutzerendgerät installierte Applikation identifiziert. Anhand dieser Applikations-Identifikation kann eine Auswerteeinrichtung des Haushaltsgerätes erkennen, dass der optische Code für das Haushaltsgerät geeignet ist. Falls das Haushaltsgerät optische Codes von mehreren Nutzerendgeräten oder einem Nutzerendgerät mit einer veralteten Version der Applikation erhält, kann zumindest einer der optischen Codes als gültig oder nicht gültig identifiziert werden. Somit ist es nicht möglich, dass beispielsweise eine veraltete Applikation zu einer Fehlfunktion oder Nicht-Funktion des Anmeldevorgangs zur Anmeldung des Haushaltsgerätes an dem Heimnetzwerk führt.

Es wird vorgeschlagen, dass eine Auswerteeinrichtung des Haushaltsgerätes die in dem optischen Code enthaltene Applikations-Identifikation mit einer in dem Haushaltsgerät gespeicherten validen Applikations-Identifikation vergleicht und bei Übereinstimmung die in dem optischen Code enthaltenen Netzwerkzugangsinformationen für eine Anmeldung an dem Heimnetzwerk freigibt. In dem Haushaltsgerät sind eine oder mehrere valide Applikations-Identifikationen gespeichert, welche dann mit einer in einem empfangenen optischen Code enthaltenen Applikations-Identifikation verglichen werden können. Nur wenn eine Übereinstimmung festgestellt wird, verwendet das Nutzerendgerät die in dem Code enthaltenen Netzwerkzugangsinformationen für eine Verbindung mit dem Heimnetzwerk.

Es wird vorgeschlagen, dass die in dem optischen Code enthaltenen Informationen bei Nicht-Übereinstimmung der Applikations-Identifikation oder bei fehlender Applikations-Identifikation von dem Haushaltsgerät nicht verwendet werden. Sofern keine Übereinstimmung zwischen der in dem Code enthaltenen Applikations-Identifikation und einer in dem Haushaltsgerät gespeicherten Applikations-Identifikation festgestellt werden kann, oder gar keine Applikations-Identifikation in dem übermittelten Code enthalten ist, wird der optische Code von dem Haushaltsgerät ignoriert und nicht weiter verwendet, d. h., dass eine Auswerteeinrichtung des Haushaltsgerätes die Netzwerkzugangsinformationen nicht aus dem optischen Code extrahiert und/oder verarbeitet und/oder an einen Router oder Access Point des Heimnetzwerkes übermittelt.

Insbesondere wird vorgeschlagen, dass der optische Code ein auf einem Display des Nutzerendgerätes dargestellter zweidimensionaler Code ist. Insbesondere kann es sich bei dem optischen Code um einen QR-Code® (Quick Response Code) handeln. Der auf dem Display des Nutzerendgerätes dargestellte zweidimensionale Code kann besonders vorteilhaft ein Schwarzweiß-Muster sein, welches nach der Art eines Barcodes oder eines QR-Codes ausgestaltet ist. Das Muster enthält Informationen in verschlüsselter Form, welche unter anderem auch den Netzwerkzugang zu dem Heimnetzwerk betreffen. Der optische Code wird vorzugsweise als Standbild auf dem Display angezeigt, wobei es jedoch auch vorgesehen sein kann, dass sich der optische Code über eine bestimmte Zeitdauer ändert, beispielsweise im Sinne einzelner aufeinanderfolgender Bilder, in Form eines Videos oder dergleichen. Darüber hinaus ist es selbstverständlich auch möglich, eine Farbcodierung in dem optischen Code vorzusehen. Das Haushaltsgerät bzw. eine Auswerteeinrichtung des Haushaltsgerätes verfügt korrespondierend zu der Art des optischen Codes über Mittel zur Decodierung des optischen Codes und zur Extrahierung der darin enthaltenen Netzwerkzugangsinformationen.

Es wird vorgeschlagen, dass der optische Code mittels eines Bildsensors des Haushaltsgerätes gelesen wird. Dazu wird der Bildsensor des Haushaltsgerätes so vor das Display des Nutzerendgerätes geführt, dass ein Erfassungsbereich des Bildsensors die Oberfläche des Displays enthält. Üblicherweise führt der Nutzer des Haushaltsgerätes sein Nutzerendgerät, beispielsweise ein mobiles Gerät wie ein Mobiltelefon, ein Laptop, einen Tablet-Computer oder dergleichen, vor den Bildsensor des Haushaltsgerätes, so dass der Bildsensor den auf dem Display des Nutzerendgerätes angezeigten optischen Code wahrnehmen kann. Der Bildsensor des Haushaltsgerätes ist vorzugsweise eine Kamera oder ein Kamerachip, welcher an dem Gehäuse des Haushaltsgerätes befestigt ist. Alternativ ist es auch möglich, dass der Bildsensor ein zu dem Haushaltsgerät externer Bildsensor ist, welcher die aufgenommenen Daten an eine Auswerteeinrichtung des Haushaltsgerätes übermittelt.

Des Weiteren wird vorgeschlagen, dass der Nutzer mittels der auf dem Nutzerendgerät installierten Applikation eine SSID des Haushaltsgerätes wählt und/oder ein Passwort für das Haushaltsgerät bestimmt und/oder einen Namen für das Haushaltsgerät bestimmt. Beispielsweise kann der Nutzer eine Taste des Nutzerendgerätes drücken, beispielsweise auch einen als Taste dargestellten Bereich eines Touchscreens, welcher die Funktion "Haushaltsgerät hinzufügen" enthält. Nach Drücken dieser physischen oder virtuellen Taste öffnet sich eine Eingabemaske auf dem Display des Nutzerendgerätes, in welcher der Nutzer eine SSID für das Haushaltsgerät, ein zugehöriges Passwort und/oder einen Namen für das Haushaltsgerät eintragen kann. Die vorgenannte Auswahl bzw. die Eingaben können in einer gemeinsamen Eingabemaske vorgenommen werden, oder alternativ in mehreren Masken. Durch Bestätigung der Eingabe, beispielswese mittels erneutem Tastendruck, wird auf dem Display des Nutzerendgerätes ein optischer Code angezeigt, welcher die vorgenannten Informationen, die Netzwerkzugangsinformationen sowie die Applikations-Identifikation enthält.

Des Weiteren ist vorgesehen, dass die SSID, das Passwort und/oder der Name mittels des optischen Codes an das Haushaltsgerät übermittelt werden. Zur Übermittlung des optischen Codes hält der Nutzer das Nutzerendgerät so vor das Haushaltsgerät, dass das den optischen Code anzeigende Display von einer entsprechenden Erfassungseinrichtung des Haushaltsgerätes erfasst werden kann, nämlich hier vorzugsweise einer Kamera des Haushaltsgerätes.

Gemäß einer Ausführungsform wird des Weiteren vorgeschlagen, dass das Haushaltsgerät einen optischen Code erstellt und anzeigt, wobei der optische Code von dem Nutzerendgerät gelesen wird. Gemäß dieser Ausführungsform weist auch das Haushaltsgerät ein Display zur Anzeige eines optischen Codes auf, welcher ebenfalls ein zweidimensionaler Code, wie insbesondere ein QR-Code, sein kann. Der optische Code dient zur Übermittlung von Informationen des Haushaltsgerätes an einen Nutzer des Haushaltsgerätes bzw. ein Nutzerendgerät des Nutzers. Somit ist unter anderem eine bidirektionale Kommunikation zwischen dem Haushaltsgerät und dem Nutzerendgerät möglich. Insbesondere ist es möglich, dass einer Einbindung des Haushaltsgerätes in das Heimnetzwerk ein Dialog mittels eines gegenseitigen Datenaustausches per optischen Codes vorausgeht. Dieser Datenaustausch kann beispielsweise eine gegenseitige Bestätigung beinhalten, dass seitens des Nutzerendgerätes eine originale Applikation eines Herstellers des Haushaltsgerätes betrieben wird, und dass seitens des Haushaltsgerätes ein originales Haushaltsgerät des betreffenden Herstellers verwendet wird. Über diesen gegenseitigen Sicherheitsscheck tauschen das Haushaltsgerät und das Nutzerendgerät Originalzertifikate aus, um eine Netzwerkeinbindung, eine Kommunikation zwischen den Komponenten und eine Steuerung spezifischer Gerätefunktionen sicherzustellen.

Insbesondere kann vorgesehen sein, dass das Haushaltsgerät in dem optischen Code eine einzustellende Konfiguration für die auf dem Nutzerendgerät installierte Applikation übermittelt. Durch diese Ausgestaltung lassen sich insbesondere spezifische Funktionen des Haushaltsgerätes steuern. Beispielsweise kann eine Grundkonfiguration der Applikation für einen bestimmten Haushaltsgerät-Typus vorgenommen werden, so dass nur für diesen bestimmten Haushaltsgerät-Typus geeignete Funktionen in der Applikation zur Verfügung stehen. Andererseits kann das Haushaltsgerät erkennen, ob eine für das Haushaltsgerät geeignete Applikation auf dem Nutzerendgerät vorhanden ist und den Nutzer gegebenenfalls auf eine ungeeignete Applikation aufmerksam machen bzw. eine Verbindung mit der Applikation ablehnen.

Das zuvor beschriebene Verfahren kann in Verbindung mit unterschiedlichen Haushaltsgeräten verwendet werden. Insbesondere eignet sich das Verfahren bei Haushaltsrobotern, wie beispielsweise Bodenbearbeitungsrobotern, wie Saugrobotern, Wischrobotern, Polierrobotern, Mährobotern und dergleichen. Des Weiteren kann das Haushaltsgerät auch mehrere dieser oder anderer Funktionen aufweisen. Grundsätzlich ist es ebenfalls möglich, dass das Haushaltsgerät ein von einem Nutzer handgeführtes Haushaltsgerät ist, beispielsweise ein von einem Nutzer handgeführter Staubsauger oder dergleichen. Des Weiteren kann das Haushaltsgerät auch ein Vorsatzgerät für ein Haushaltsgerät sein, ein Zubehör oder dergleichen. Insbesondere eignet sich das Verfahren bei solchen Haushaltsgeräten, die selbst nicht über eine Benutzerschnittstelle zur Eingabe der Netzwerkzugangsinformationen verfügen.

### Kurze Beschreibung der Zeichnungen

Im Folgenden wird die Erfindung anhand von Ausführungsbeispielen näher erläutert. Es zeigen:
- Fig. 1: ein Heimnetzwerk mit einem Haushaltsgerät, einem Nutzerendgerät und einem Access Point,
- Fig. 2: das Haushaltsgerät und das Nutzerendgerät während einer Übermittlung eines optischen Codes von dem Nutzerendgerät an das Haushaltsgerät,
- Fig. 3: das Haushaltsgerät und das Nutzerendgerät während einer bidirektionalen Kommunikation.

### Beschreibung der Ausführungsformen

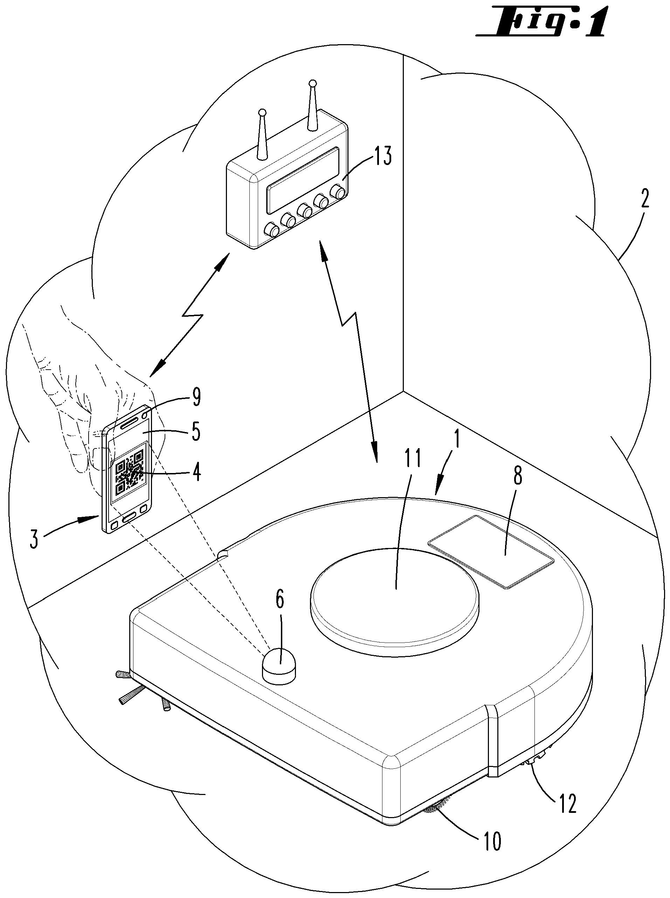

Figur 1 zeigt ein Heimnetzwerk 2, beispielsweise ein übliches WiFi-Netzwerk mit einem Access Point 13, einem Haushaltsgerät 1 und einem Nutzerendgerät 3. Das Haushaltsgerät 1, das Nutzerendgerät 3 und der Access Point 13 weisen WiFi-Funkmodule zur Kommunikation auf. Das Haushaltsgerät 1 ist hier ein sich selbsttätig fortbewegendes Reinigungsgerät, nämlich ein Saugroboter. Das Nutzerendgerät 3 ist ein Smartphone.

Das Haushaltsgerät 1 weist eine nicht weiter dargestellte Navigations-und Selbstlokalisierungseinrichtung auf, mittels welcher sich das Haushaltsgerät 1 innerhalb einer Umgebung orientieren und fortbewegen kann. Die Navigations- und Selbstlokalisierungseinrichtung wertet Messdaten einer Abstandsmesseinrichtung 11 auf, welche hier beispielsweise ein Rundum-Laserscanner nach der Art eines Lasertriangulationsmesssystems ist. Mittels der Abstandsmesseinrichtung 11 werden Abstände zu Hindernissen und Raumbegrenzungen gemessen. Diese Messdaten werden vorzugsweise mit Messdaten eines Odometriesensors verglichen, welcher eine von dem Haushaltsgerät 1 zurückgelegte Strecke erfasst. Die Informationen über Hindernisse und Raumbegrenzungen der Umgebung werden zu einer Umgebungskarte des Haushaltsgerätes 1 weiterverarbeitet, mit deren Hilfe sich das Haushaltsgerät 1 in der Umgebung orientieren kann. Des Weiteren weist das Haushaltsgerät 1 ein Reinigungselement 10 zur Bearbeitung einer zu reinigenden Fläche auf. Das Reinigungselement 10 ist hier beispielsweise eine elektromotorisch angetriebene Borstenwalze. Das Haushaltsgerät 1 verfügt über mehrere Räder 12, welche motorisch angetrieben sind und der Fortbewegung des Haushaltsgerätes 1 innerhalb der Umgebung dienen. Das Haushaltsgerät 1 verfügt zudem über einen Bildsensor 6, hier eine Kamera. Auf einer Oberseite des Haushaltsgerätes 1 ist des Weiteren ein Display 8 angeordnet, auf welchem verschiedene Informationen angezeigt werden können.

Das Nutzerendgerät 3 weist ein Display 5 und einen Bildsensor 9, nämlich eine Kamera, auf. Auf dem Display 5 ist ein optischer Code 4 in Form eines QR-Codes dargestellt, auf welchen im Folgenden noch weiter eingegangen wird.

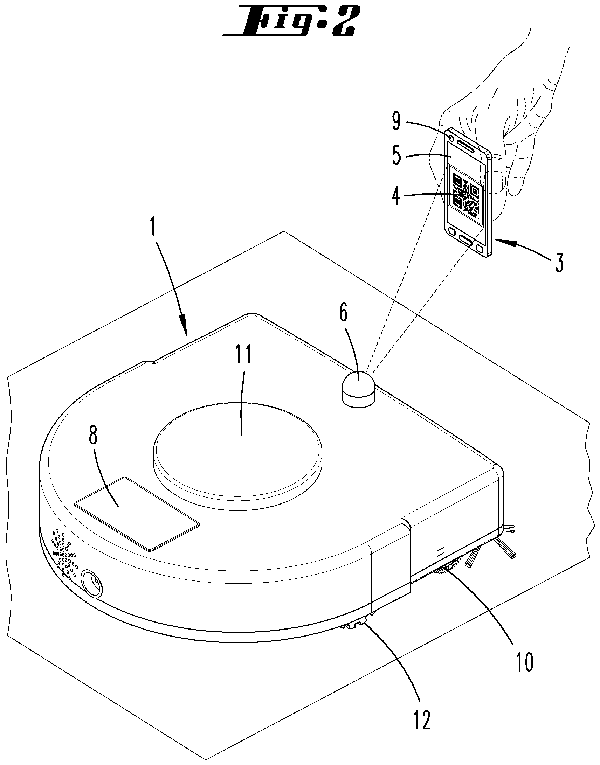

Figur 2 zeigt das Haushaltsgerät 1 und das Nutzerendgerät 3 während eines Auslesens des auf dem Display 5 des Nutzerendgerätes 3 dargestellten optischen Codes 4 mittels des Bildsensors 6 des Haushaltsgerätes 1.

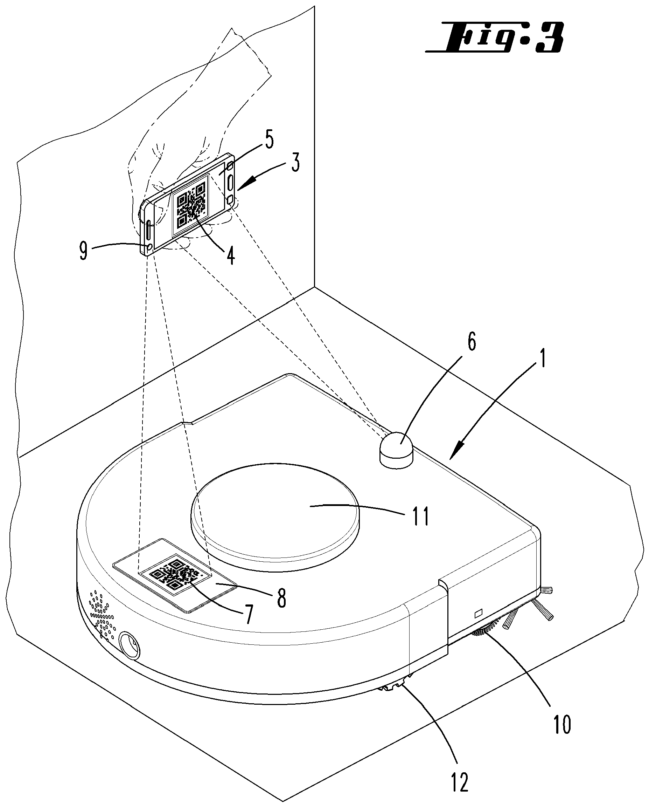

Figur 3 zeigt das Haushaltsgerät 1 und das Nutzerendgerät 3 während einer bidirektionalen Kommunikation. Dabei wird auf dem Display 5 des Nutzerendgerätes 3 ein optischer Code 4 angezeigt. Auf dem Display 8 des Haushaltsgerätes 1 wird ein optischer Code 7 angezeigt. Das Haushaltsgerät 1 und das Nutzerendgerät 3 sind relativ zueinander so positioniert, dass der Erfassungsbereich des Bildsensors 6 des Haushaltsgerätes 1 das Display 5 des Nutzerendgerätes 3 umfasst, und der Erfassungsbereich des Bildsensors 9 des Nutzerendgerätes 3 das Display 8 des Haushaltsgerätes 1 beinhaltet.

Die Erfindung funktioniert zur Verbindung des Haushaltsgerätes 1 mit dem Heimnetzwerk 2 nun so, dass zunächst das Nutzerendgerät 3 mit dem von dem Access Point 13 bereitgestellten Heimnetzwerk 2 verbunden wird. Dazu werden üblicherweise über eine Bedienschnittstelle, nämlich hier beispielsweise das Display 5 des Nutzerendgerätes 3, die Netzwerkzugangsinformationen des Access Points 13 an das Nutzerendgerät 3 übermittelt. Um davon ausgehend auch das Haushaltsgerät 1, welches nicht über eine Benutzerschnittstelle verfügt, in das Heimnetzwerk 2 einzubinden, übermittelt das Nutzerendgerät 3 die Netzwerkzugangsinformationen an das Haushaltsgerät 1. Dazu ist es erforderlich, dass auf dem Nutzerendgerät 3 eine Applikation installiert ist, welche der Kommunikation mit dem Haushaltsgerät 1 dient. Der Nutzer startet die Applikation und öffnet eine Eingabemaske, in welcher er eine SSID des Haushaltsgerätes 1, ein zugehöriges Passwort und einen Namen für das Haushaltsgerät 1 eingibt. Die SSID des Haushaltsgerätes 1 kann herstellerseitig beispielsweise auf einem Aufdruck oder Aufkleber auf dem Gehäuse des Haushaltsgerätes 1 bereitgestellt sein. Nach einer Bestätigung der getätigten Eingaben durch den Nutzer wird mittels der Applikation ein QR-Code generiert, in welchen zusätzlich die Netzwerkzugangsinformationen für das Heimnetzwerk 2 und eine Applikations-Identifikation eingebunden werden. Der generierte QR-Code wird auf dem Display 5 des Nutzerendgerätes 3 angezeigt. Um den optischen Code 4 bzw. die darin enthaltenen Netzwerkzugangsinformationen nun an das Haushaltsgerät 1 zu übermitteln, wird das Nutzerendgerät 3 mit dem Display 5 vor den Bildsensor 6 des Haushaltsgerätes 1 gehalten, so dass das Display 5 in den Erfassungsbereich des Bildsensors 6 ragt. Der Bildsensor 6 erkennt die Anwesenheit eines optischen Codes 4 innerhalb seines Erfassungsbereiches, gegebenenfalls nach Anforderung einer entsprechenden Erfassungsfunktion durch den Nutzer, und liest den optischen Code 4 ein. Der Bildsensor 6 übermittelt den optischen Code 4 an eine Auswerteeinrichtung des Haushaltsgerätes 1, welche die Inhalte des optischen Codes 4 daraufhin auswertet. Dabei wird zunächst geprüft, ob die SSID und das Passwort mit in dem Haushaltsgerät 1 hinterlegten Daten übereinstimmen. Des Weiteren wird überprüft, ob die in dem optischen Code 4 enthaltene Applikations-Identifikation mit einer in dem Haushaltsgerät 1 gespeicherten Applikations-Identifikation übereinstimmt, d. h. ob es sich um eine valide Applikations-Identifikation handelt. Sofern eine Übereinstimmung gefunden wird, wird die Netzwerkzugangsinformation aus dem optischen Code 4 extrahiert. Daraufhin kann sich das Haushaltsgerät 1 mittels der Netzwerkzugangsinformationen an dem Access Point 13 des Heimnetzwerkes 2 anmelden.

Figur 3 zeigt eine bidirektionale Kommunikation zwischen dem Haushaltsgerät 1 und dem Nutzerendgerät 3. Dabei werden gleichzeitig oder zeitlich kurz aufeinander sowohl Daten von dem Nutzerendgerät 3 an das Haushaltsgerät 1 übertragen, als auch Daten von dem Haushaltsgerät 1 an das Nutzerendgerät 3. Beispielsweise funktioniert diese Ausführungsform so, dass das Nutzerendgerät 3 wie bereits in Bezug auf die Figuren 1 und 2 dargestellt, einen optischen Code 4 auf seinem Display 5 anzeigt, welcher eine SSID, ein Passwort und einen Namen des Haushaltsgerätes 1, Netzwerkzugangsinformationen zur Anmeldung an dem Heimnetzwerk 2 sowie eine Applikations-Identifikation der auf dem Nutzerendgerät 3 installierten Applikation aufweist. Der optische Code 4 ist auch hier ein QR-Code. Bezogen auf das Haushaltsgerät 1 generiert eine Steuereinrichtung des Haushaltsgerätes 1 ebenfalls einen optischen Code 7, welcher dann zur Anzeige auf dem Display 8 des Haushaltsgerätes 1 gebracht wird. Der optische Code 7 enthält beispielsweise eine einzustellende Grundkonfiguration für eine auf dem Nutzerendgerät 3 installierte Applikation. Damit übermittelt das Haushaltsgerät 1 beispielsweise Informationen über Funktionen der Applikation, welche für den besonderen Typus des Haushaltsgerätes 1 geeignet sind.

Des Weiteren können über die bidirektionale Kommunikation mittels der optischen Codes 4, 7 Originalzertifikate des Nutzerendgerätes 3 und des Haushaltsgerätes 1 ausgetauscht werden, so dass eine Netzwerkeinbindung, eine Kommunikation zwischen den Komponenten und eine Steuerung der spezifischen Gerätefunktionen sichergestellt ist. Des Weiteren kann das Haushaltsgerät 1 auch hier anhand der in dem optischen Code 4 des Nutzerendgerätes 3 codierten Applikations-Identifikation erkennen, ob eine für dieses spezielle Haushaltsgerät 1 geeignete Applikation auf dem Nutzerendgerät 3 vorhanden ist. Gegebenenfalls kann das Haushaltsgerät 1 andernfalls eine Information an den Nutzer übermitteln, welche auf eine nicht geeignete Applikation hinweist. Dieser Hinweis kann beispielsweise auf dem Display 8 des Haushaltsgerätes 1 angezeigt werden oder zunächst an das Nutzerendgerät 3 und dann von dort aus an den Nutzer übermittelt werden.

### Liste der Bezugszeichen

- 1: Haushaltsgerät
- 2: Heimnetzwerk
- 3: Nutzerendgerät
- 4: Optischer Code
- 5: Display
- 6: Bildsensor
- 7: Optischer Code
- 8: Display
- 9: Bildsensor
- 10: Reinigungselement
- 11: Abstandsmesseinrichtung
- 12: Rad
- 13: Access Point

## Patentansprüche

1. Verfahren zum Verbinden eines Haushaltsgerätes (1) mit einem drahtlosen Heimnetzwerk (2), wobei Netzwerkzugangsinformationen mittels eines auf einem Nutzerendgerät (3) dargestellten optischen Codes (4) von dem Nutzerendgerät (3) an das Haushaltsgerät (1) übermittelt werden und wobei sich das Haushaltsgerät (1) unter Nutzung der empfangenen Netzwerkzugangsinformationen an dem drahtlosen Heimnetzwerk (2) anmeldet, **dadurch gekennzeichnet, dass** ein Nutzer eine auf dem Nutzerendgerät (3) installierte Applikation startet und das Haushaltsgerät (1) bezeichnende Zugangsdaten eingibt, wobei mittels der Applikation ein optischer Code (4) generiert wird, in welchen die Zugangsdaten, die Netzwerkzugangsinformationen für das Heimnetzwerk (2) und eine Applikations- Identifikation der Applikation eingebunden werden, wobei der optische Code (4) an das Haushaltsgerät (1) übermittelt wird, und wobei das Haushaltsgerät (1) die in dem optischen Code (4) enthaltenen Zugangsdaten sowie die Applikations-Identifikation mit in dem Haushaltsgerät (1) hinterlegten Daten und einer in dem Haushaltsgerät (1) gespeicherten Applikations- Identifikation vergleicht und im Falle der Übereinstimmung die Netzwerkzugangsinformationen aus dem optischen Code (4) extrahiert.

2. Verfahren nach Anspruch 1, **dadurch gekennzeichnet, dass** eine Auswerteeinrichtung des Haushaltsgerätes (1) die in dem optischen Code (4) enthaltene Applikations-Identifikation mit einer in dem Haushaltsgerät (1) gespeicherten Applikations-Identifikation vergleicht und bei Übereinstimmung die in dem optischen Code (4) enthaltenen Netzwerkzugangsinformationen für eine Anmeldung an dem Heimnetzwerk (2) freigibt.

3. Verfahren nach Anspruch 2, **dadurch gekennzeichnet, dass** die in dem optischen Code (4) enthaltenen Informationen bei Nicht-Übereinstimmung der Applikations-Identifikation oder bei fehlender Applikations-Identifikation von dem Haushaltsgerät (1) nicht verwendet werden.

4. Verfahren nach einem der vorhergehenden Ansprüche, **dadurch gekennzeichnet, dass** der optische Code (4) ein auf einem Display (5) des Nutzerendgerätes (3) dargestellter zweidimensionaler Code, insbesondere ein QR-Code® (Quick Response Code), ist.

5. Verfahren nach einem der vorhergehenden Ansprüche, **dadurch gekennzeichnet, dass** der optische Code (4) mittels eines Bildsensors (6) des Haushaltsgerätes (1) gelesen wird.

6. Verfahren nach einem der vorhergehenden Ansprüche, **dadurch gekennzeichnet, dass** der Nutzer mittels der auf dem Nutzerendgerät (3) installierten Applikation eine SSID des Haushaltsgerätes (1) wählt und/oder ein Passwort für das Haushaltsgerät (1) bestimmt und/oder einen Namen für das Haushaltsgerät (1) bestimmt.

7. Verfahren nach Anspruch 6, **dadurch gekennzeichnet, dass** die SSID, das Passwort und/oder der Name mittels des optischen Codes (4) an das Haushaltsgerät (1) übermittelt werden.

8. Verfahren nach einem der vorhergehenden Ansprüche, **dadurch gekennzeichnet, dass** das Haushaltsgerät (1) einen optischen Code (7) erstellt und anzeigt, wobei der optische Code (7) von dem Nutzerendgerät (3) gelesen wird.

9. Verfahren nach Anspruch 8, **dadurch gekennzeichnet, dass** das Haushaltsgerät (1) in dem optischen Code (7) eine einzustellende Konfiguration für die auf dem Nutzerendgerät (3) installierte Applikation übermittelt.

## Claims

1. A method for connecting a household appliance (1) to a wireless home network (2), wherein network access information is transmitted from a user terminal (3) to the household appliance (1) by means of an optical code (4) displayed on the user terminal (3), and wherein the household appliance (1) logs on to the wireless home network (2) by utilizing the received network access information, **characterized in that** a user starts an application installed on the user terminal (3) and enters access data indicating the household appliance (1), wherein the application generates an optical code (4), into which the access data for the household appliance (1), the network access information for the home network (2) and an application identification of the application are integrated, wherein the optical code (4) is transmitted to the household appliance (1), and wherein the household appliance (1) compares the access data, as well as the application identification, contained in the optical code (4) with data stored in the household appliance (1), as well as an application identification stored in the household appliance (1), and in case of a match extracts the network access information from the optical code (4).

2. The method according to claim 1, **characterized in that** an evaluation device of the household appliance (1) compares the application identification contained in the optical code (4) with an application identification stored in the household appliance (1) and releases the network access information contained in the optical code (4) for logging on to the home network (2) if the application identifications match.

3. The method according to claim 2, **characterized in that** the information contained in the optical code (4) is not used by the household appliance (1) if the application identification does not match or is missing.

4. The method according to one of the preceding claims, **characterized in that** the optical code (4) is a two-dimensional code displayed on a screen (5) of the user terminal (3), particularly a QR code(R) (Quick Response code).

5. The method according to one of the preceding claims, **characterized in that** the optical code (4) is scanned by means of an image sensor (6) of the household appliance (1).

6. The method according to one of the preceding claims, **characterized in that** the user selects an SSID of the household appliance (1) and/or specifies a password for the household appliance (1) and/or specifies a name for the household appliance (1) by means of the application installed on the user terminal (3).

7. The method according to claim 6, **characterized in that** the SSID, the password and/or the name are transmitted to the household appliance (1) by means of the optical code (4).

8. The method according to one of the preceding claims, **characterized in that** the household appliance (1) generates and displays an optical code (7), wherein the optical code (7) is scanned by the user terminal (3).

9. The method according to claim 8, **characterized in that** the household appliance (1) transmits a configuration to be adjusted for the application installed on the user terminal (3) in the optical code (7).

## Revendications

1. Procédé de connexion d'un appareil ménager (1) à un réseau domestique sans fil (2), dans lequel des informations d'accès au réseau sont transmises par un terminal utilisateur (3) à l'appareil ménager (1) au moyen d'un code optique (4) affiché sur le terminal utilisateur (3) et dans lequel l'appareil ménager (1) se connecte au réseau domestique sans fil (2) en utilisant les informations d'accès réseau reçues, **caractérisé en ce qu'**un utilisateur lance une application installée sur le terminal utilisateur (3) et entre des données d'accès désignant l'appareil ménager (1), dans lequel un code optique (4) est généré au moyen de l'application dans lequel sont intégrés les données d'accès, les informations d'accès au réseau pour le réseau domestique (2) et une identification d'application de l'application, dans lequel le code optique (4) est transmis à l'appareil domestique (1), et dans lequel l'appareil domestique (1) compare les données d'accès contenues dans le code optique (4), ainsi que l'identification d'application aux données enregistrées dans l'appareil domestique (1) et à une identification d'application enregistrée dans l'appareil domestique (1) et, en cas de concordance, extrait les informations d'accès au réseau du code optique (4).

2. Procédé selon la revendication 1, **caractérisé en ce qu'**un dispositif d'évaluation de l'appareil ménager (1) compare l'identification d'application contenue dans le code optique (4) avec une identification d'application enregistrée dans l'appareil ménager (1) et, en cas de concordance, autorise l'utilisation des informations d'accès au réseau contenues dans le code optique (4) pour une connexion au réseau domestique (2).

3. Procédé selon la revendication 2, **caractérisé en ce que** les informations contenues dans le code optique (4) ne sont pas utilisées par l'appareil ménager (1) si l'identification de l'application ne concorde pas ou si l'identification de l'application est manquante.

4. Procédé selon l'une des revendications précédentes, **caractérisé en ce que** le code optique (4) est un code bidimensionnel, en particulier un QR-Code® (Quick Response Code), qui est affiché sur un écran (5) du terminal utilisateur (3).

5. Procédé selon l'une des revendications précédentes, **caractérisé en ce que** le code optique (4) est lu au moyen d'un capteur d'image (6) de l'appareil ménager (1).

6. Procédé selon l'une des revendications précédentes, **caractérisé en ce que** l'utilisateur sélectionne un SSID de l'appareil ménager (1) et/ou spécifie un mot de passe pour l'appareil ménager (1) et/ou spécifie un nom pour l'appareil ménager (1) au moyen de l'application installée sur le terminal utilisateur (3).

7. Procédé selon la revendication 6, **caractérisé en ce que** le SSID, le mot de passe et/ou le nom sont transmis à l'appareil ménager (1) au moyen du code optique (4).

8. Procédé selon l'une des revendications précédentes, **caractérisé en ce que** l'appareil ménager (1) génère et affiche un code optique (7), le code optique (7) étant lu par le terminal utilisateur (3).

9. Procédé selon la revendication 8, **caractérisé en ce que** l'appareil ménager (1) transmet dans le code optique (7) une configuration à régler pour l'application installée sur le terminal utilisateur (3).
